**Europäisches Patentamt**

**European Patent Office**

**Office européen des brevets**

(19)

(11) Veröffentlichungsnummer: **0 050 708**
**B1**

(12) **EUROPÄISCHE PATENTSCHRIFT**

(45) Veröffentlichungstag der Patentschrift:
**13.02.85**

(21) Anmeldenummer: **81105158.0**

(22) Anmeldetag: **03.07.81**

(51) Int. Cl.⁴: **G 01 G 1/24,** G 01 G 3/14,
G 01 G 21/18

(54) **Oberschalige Waage.**

(30) Priorität: **27.10.80 US 200979**

(43) Veröffentlichungstag der Anmeldung:
**05.05.82 Patentblatt 82/18**

(45) Bekanntmachung des Hinweises auf die Patenterteilung:
**13.02.85 Patentblatt 85/7**

(84) Benannte Vertragsstaaten:
**CH DE FR GB LI NL**

(56) Entgegenhaltungen:
**EP - A - 0 017 600**
**DE - A - 2 156 410**
**FR - A - 2 424 523**
**FR - A - 2 436 373**
**US - A - 3 707 076**
**US - A - 4 125 168**

(73) Patentinhaber: **Mettler Instrumente AG,**
**CH-8606 Greifensee (CH)**

(72) Erfinder: **Kupper, Walter, Dr., 65 Barnsdale Road,**
**Madison N.J. 07940 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine oberschalige Waage, umfassend einen Tragrahmen, wenigstens zwei am Tragrahmen mittels Schwenklagern befestigte, innerhalb des Tragrahmens angeordnete und im wesentlichen in einer Ebene liegende Hebel, ein elastisch verformbares, elektrische Signale abgebendes, mit den Hebeln verbundenes Meßglied, eine sich auf den Hebeln direkt oder indirekt abstützende Waagschale, und ein Gehäuse.

Waagen dieser oder ähnlicher Art sind in verschiedenen Ausführungen bekanntgeworden, so beispielsweise aus DE-A-2 156 410, aus den US-Patentschriften 3 465 838, 3 707 076 oder 3 938 603. Allen bisher bekannten Ausführungen ist gemeinsam, daß bei der Montage der Waage stets eine beträchtliche Anzahl von Einzelteilen zusammenzufügen ist, wobei meist noch eine gewisse Abgleich- oder Justierarbeit hinzukommt. Daher ist regelmäßig der Montageaufwand höher als der Materialaufwand.

Aufgabe der Erfindung war es, bei einer Waage der genannten Art den Montage- und Justieraufwand merklich herabzusetzen und gleichzeitig eine flache Bauform zu ermöglichen.

Dies wird gemäß der Erfindung dadurch erreicht, daß die Hebel, der Tragrahmen und die Schwenklager ein einstückiges, im wesentlichen zweidimensionales, horizontal sich erstreckendes Bauteil bilden.

Die Erfindung ist damit besonders vorteilhaft anwendbar bei der Fertigung von Waagen in großen Serien zu niedrigen Kosten.

Besonders vorteilhaft ist es, wenn das einstückige Bauteil auch das Meßglied umfaßt. Damit reduziert sich der mechanische Teil der Waage im wesentlichen auf drei bzw. vier Elemente, nämlich den Rahmen mit integriertem Meß- und Hebelwerk, die Waagschale sowie das (zweiteilige) Gehäuse.

Zweckmäßigerweise ist der Tragrahmen rechteckig und die Waagschale eine rechteckige, das Oberteil des Gehäuses bildende Plattform. Damit ist die Anzahl der Bestandteile weiter reduziert.

Eine bevorzugte Ausbildung der Erfindung ist dadurch gekennzeichnet, daß Stege der Hebel parallel zueinander angeordnet sind und daß das Meßglied derart zwischen den beiden Hebelenden angeordnet ist, daß es bei Belastung der Waagschale eine Torsion erfährt.

Eine andere zweckmäßige Ausführungsform der Erfindung kennzeichnet sich dadurch, daß die Hebel V-förmig zueinander geneigte Schenkel aufweisen, daß sie gelenkig aneinander angeschlossen sind und daß das Meßglied das freie Ende des einen Hebels mit dem rahmenseitigen Ende des anderen Hebels verbindet.

Während die erstgenannte Ausführungsform eher für Lastbereiche von einigen Dutzend Kilogramm geeignet erscheint (z. B. Paketwaagen), bietet sich die zweite Ausführungsform beispielsweise für Personenwaagen an. In beiden Fällen sind vorzugsweise die Hebel ferner durch zwei an diese gelenkig angeschlossene starre Streben miteinander verbunden, auf welche Streben sich die Waagschale abstützt, wobei zweckmäßigerweise auch die Streben Bestandteile des einstückigen Bauteils sind.

In einer bevorzugten Ausbildung der Waage sind die Schwenklager durchwegs in das einstückige Bauteil eingeformte Biegelager.

Gemäß einer weiteren Ausbildung der Erfindung verfügt das Meßglied über Dehnmeß-Widerstände in Dünnfilm-Ausführung, wobei diese vorzugsweise nur auf einer Fläche des Meßgliedes aufgebracht sind, was eine weitere Vereinfachung bei der Herstellung bedeutet.

Die Anwendung der Erfindung bietet sich besonders an bei Waagen niedriger Bauhöhe und mäßiger Auflösung des Meßresultates, so — wie bereits erwähnt — bei Personenwaagen, aber auch bei Waagen für gewisse industrielle Zwecke.

Nachstehend werden zwei Ausführungsbeispiele der Erfindung anhand der nicht maßstäblichen Zeichnung näher beschrieben. In der Zeichnung ist

Fig. 1 eine Draufsicht auf eine erste Ausführungsform des einstückigen Bauteils der Waage,

Fig. 2 ein Schnitt längs der Linie 2-2 in Fig. 1,

Fig. 3 ein Schnitt längs der Linie 3-3 in Fig. 1, etwas vergrößert,

Fig. 4 eine Draufsicht auf eine zweite Ausführungsform des einstückigen Bauteils der Waage,

Fig. 5 ein Schnitt längs der Linie 5-5 in Fig. 4,

Fig. 6 ein Schnitt längs der Linie 6-6 in Fig. 4, und

Fig. 7 ein Schnitt durch das Meßglied längs der Linie 7-7 in Fig. 4, vergrößert dargestellt.


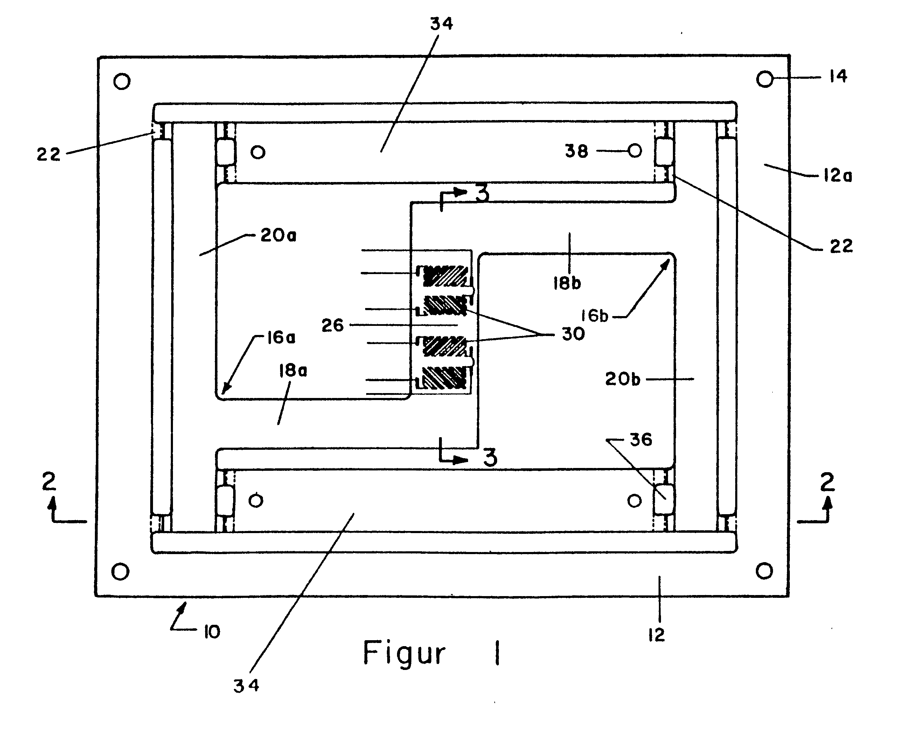

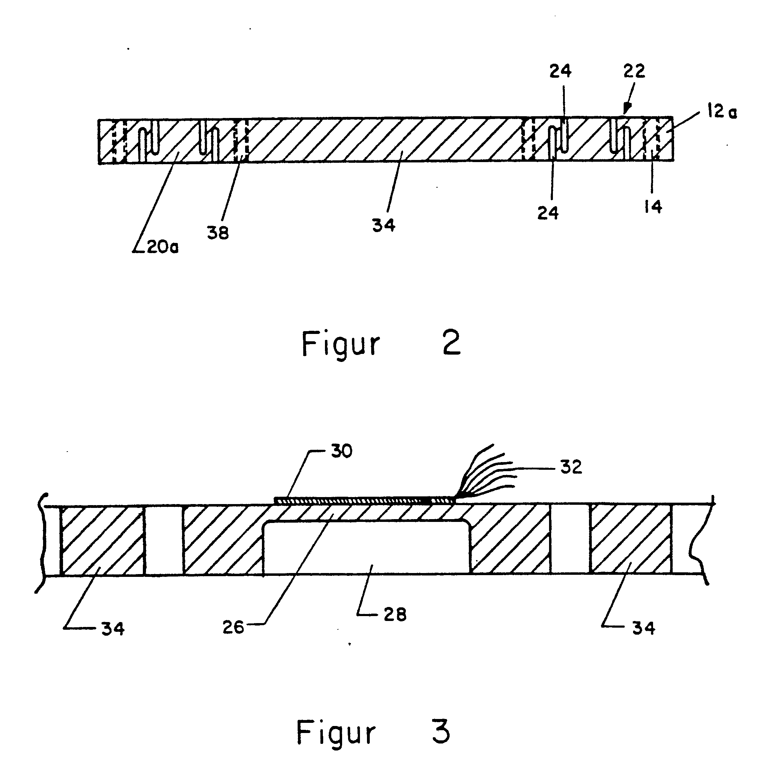

Beispiel I (Fig. 1—3)

Das einstückige Bauteil 10 umfaßt zunächst einmal einen starren Tragrahmen 12. In seinen vier Ecken sind Löcher 14 vorgesehen, die zum Anschrauben eines unteren Gehäusebleches sowie von Füßen dienen (nicht gezeigt).

An die Schmalseiten 12a des Rahmens sind, einander gegenüberliegend, zwei starre Hebel 16a, 16b angelenkt. Sie bilden je ein unsymmetrisches T, deren Stege 18a, 18b gegeneinander versetzt und einander zugewandt sind. Die Flanschen 20a, 20b der T-Hebel 16a bzw. 16b nehmen fast die ganze freie Breite der Schmalseiten 12a des Rahmens ein. Sie sind an ihren Enden durch je zwei Biegelager 22 mit dem Rahmen verbunden. Die die Gelenke darstellenden Biegelager 22 werden durch nahe beieinander liegende, wechselseitige Nuten 24 gebildet.

Die freien Enden der Stege 18a, 18b sind durch einen Verbindungssteg 26 starr miteinander verbunden, welcher das Meßglied darstellt. Er enthält unten eine angenähert rechteckige Aussparung 28, in den Bereich auf der Oberseite eine Dehnmeß-Widerstandsbrücke 30 angeordnet ist. Deren Anschlußdrähte 32 führen zur konventionell aufgebauten Meß- und Auswerteschaltung (nicht dargestellt), welche innerhalb oder außerhalb der Waage angeordnet sein kann. Die Dehnmeß-Widerstandsbrücke 30 kann auf verschiedene Weise angebracht sein: Sie kann — als in sich fertiges Element (d. h. als Dehnmeß-Streifen) — aufgeklebt sein auf den Steg 26, sie kann aber auch in einem Dünnfilmverfahren direkt auf diesen aufgebracht werden.

Die beiden Flansche 20a, 20b der Hebel 16a bzw. 16b sind durch zwei parallele starre Streben 34 miteinander verbunden. Die Verbindungsstellen sind wiederum Biegelager 22, gebildet durch versetzte Nuten 24. Durchbrechungen 36 bewirken, daß die Gelenke 22 die erforderliche Biegsamkeit aufweisen. Je zwei Löcher 38 mit oder auch ohne Gewinde sind zur Aufnahme von Stiften, Bolzen oder ähnlichem vorgesehen, welche die Waagschale tragen (nicht gezeigt). Die rechteckige, dem Rahmen 12, 12a entsprechend dimensionierte Waagschale übernimmt dabei die Funktion des Gehäuseoberteils.

Die Gelenkstellen 22 an den Verbindungsstellen Rahmen 12a/Flansch 20a, 20b bzw. Flansch 20a, 20b/Streben 34 bilden eine Parallelführung: Beim Wägen tritt eine lastabhängige (wenn auch kleine) Absenkung der Streben 34 parallel zum Rahmen 12 auf. Diese resultiert in einer ebenfalls lastproportionalen Verschwenkung der T-Hebel 16a, 16b, welche zu einer wiederum lastproportionalen Torsion des Meßgliedes 26 führt, die praktisch ausschließlich im Bereich der Aussparung 28 stattfindet. Die entsprechende Änderung der Widerstände in der Meßbrücke 30 wird in bekannter Weise ausgewertet und zu einem anzeigbaren Gewichtssignal umgeformt.

Das beschriebene einstückige Bauteil 10 hat, abgesehen von den Biegelagern 22 und der Aussparung 28, überall im wesentlichen die gleiche Dicke. Es besteht aus einer Aluminium-Legierung (wobei aber auch andere Materialien vorstellbar sind) und ist zweckmäßigerweise im Druckguß-Verfahren hergestellt.

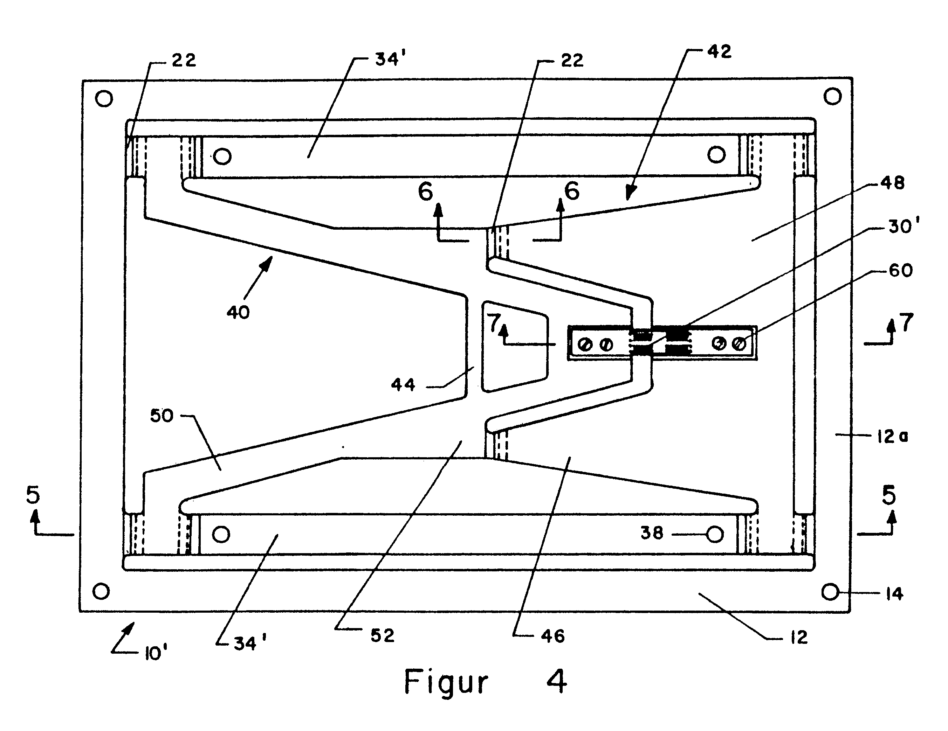

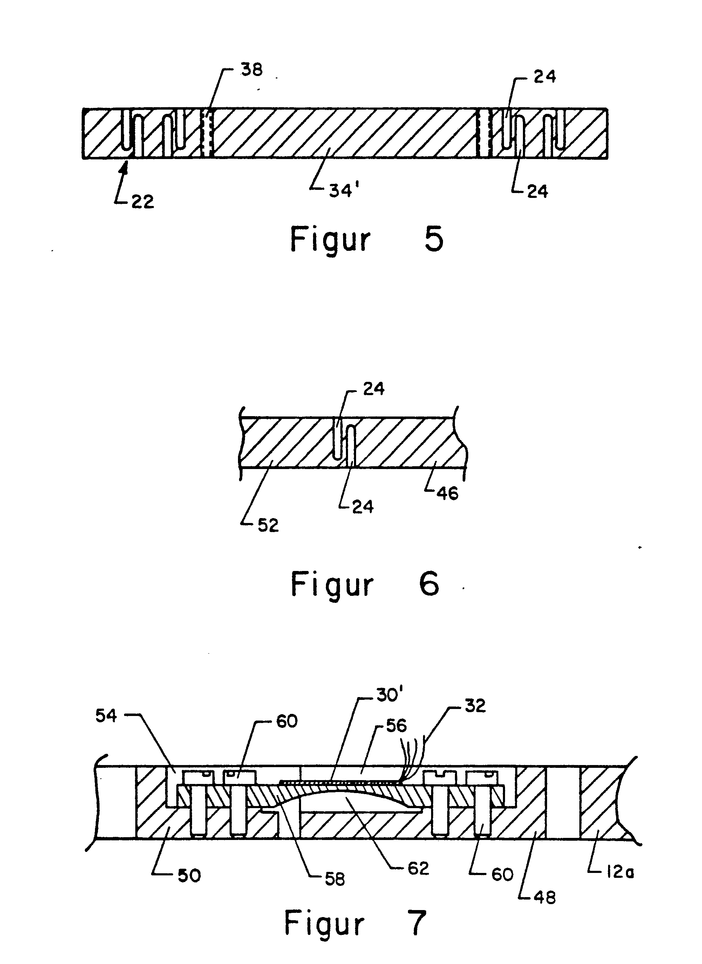

### Beispiel II (Fig. 4—7)

Das Grundkonzept dieses Ausführungsbeispiels ist dasselbe wie dasjenige des Beispiels I; wesentliche Unterschiede betreffen die Hebelanordnung und das Meßglied.

Das einstückige Bauteil 10' umfaßt wiederum einen starren rechteckigen Rahmen 12 mit Löchern 14 in seinen Ecken zum Befestigen von Gehäuseblech und Füßen. An den Rahmenschmalseiten 12a sind ebenfalls Gelenke 22, gebildet von Nutenpaaren 24, vorgesehen, zum Anschluß zweier Hebel 40 bzw. 42, welche hier unterschiedlich geformt sind. Der Hebel 40 hat die Gestalt eines offenen V, verstärkt durch eine Rippe 44. Der Hebel 42, mit ebenfalls V-artig geneigten Schenkeln 46, verfügt über eine breite Basis 48. An seinen freien Schenkelenden ist er über je ein Biegegelenk 22 in der Mittellinie des Bauteils 10' mit den Schenkeln 50 des Hebels 40 verbunden, die an dieser Stelle über je einen Ansatz 52 verfügen. Das geschlossene Ende des Hebels 40 weist eine Nische 54 auf, und in der zugekehrten Seite der Basis 48 des Hebels 42 ist, fluchtend zur Nische 54, ebenfalls eine Nische 56 vorgesehen. Die beiden Nischen 54 und 56 verfügen auf gleicher Höhe über je eine Auflagefläche zur Aufnahme des Meßgliedes 58, das in diesem Beispiel als selbständiges Bauteil ausgebildet und mit je zwei Schrauben 60 an den Hebeln 40 und 42 befestigt ist. Das Meßglied 58 verfügt an seiner Unterseite über eine bogenförmige Ausnehmung 62, in deren Bereich sich auf der Oberseite die Dehnmeß-Widerstandsbrücke 30' befindet. Dessen Widerstandsänderungen werden über die elektrischen Anschlüsse 32 von der Meß- und Auswerteschaltung erfaßt.

Analog zum Beispiel I sind auch hier die beiden Hebel durch ein Paar Streben 34' über Gelenke 22 miteinander verbunden, wobei wiederum Löcher 38 vorgesehen sind, welche — über Bolzen oder ähnliche Elemente — die Waagschale tragen.

Aus der Geometrie der Anordnung ist ersichtlich, daß die parallele Absenkung der Streben 34' unter Last wiederum zu einer leichten Verschwenkung der Hebel 40, 42 gegeneinander führt. Diese Verschwenkung führt nun, im Gegensatz zum Beispiel I, zu einer Biegebeanspruchung des Meßgliedes 58, welche in bekannter Weise das Meßsignal erzeugt.

### Patentansprüche

1. Oberschalige Waage, umfassend
   — einen Tragrahmen (12, 12a)
   — wenigstens zwei am Tragrahmen mittels Schwenklagern (22) befestigte, innerhalb des Tragrahmens angeordnete und im wesentlichen in einer Ebene liegende Hebel (16a, 16b; 40, 42)
   — ein elastisch verformbares, elektrische Signale abgebendes und mit den Hebeln verbundenes Meßglied (26, 30; 58, 30')
   — eine sich auf den Hebeln direkt oder indirekt abstützende Waagschale, und
   — ein Gehäuse,
   dadurch gekennzeichnet, daß die Hebel (16a, 16b; 40, 42), der Tragrahmen (12, 12a) und die Schwenklager (22) ein einstückiges, im wesentlichen zweidimensionales, horizontal sich erstreckendes Bauteil (10; 10') bilden.

2. Waage nach Anspruch 1, dadurch gekennzeichnet, daß das einstückige Bauteil auch das Meßglied (26) umfaßt.

3. Waage nach Anspruch 1, dadurch gekennzeichnet, daß der Tragrahmen (12; 12a) rechteckig ist und daß die Waagschale eine rechteckige, das Oberteil des Gehäuses bildende Plattform ist.

4. Waage nach einem der Ansprüche 1 bis 3, dadurch gekennzeichnet, daß Stege (18a, 18b) der Hebel (16a, 16b) parallel zueinander angeordnet sind und daß das Meßglied (26) derart zwischen den beiden Hebelenden angeordnet ist, daß es bei Belastung der Waagschale eine Torsion erfährt.

5. Waage nach einem der Ansprüche 1 bis 3, dadurch gekennzeichnet, daß die Hebel (40, 42) V-förmig zueinander geneigte Schenkel (46, 50) aufweisen, daß sie gelenkig aneinander angeschlossen sind und daß das Meßglied (58) das freie Ende des einen Hebels (40) mit dem rahmenseitigen Ende des anderen Hebels (42) verbindet.

6. Waage nach Anspruch 4 oder 5, dadurch gekennzeichnet, daß die Hebel (16a, 16b; 40, 42) ferner durch zwei an diese gelenkig angeschlossene starre Streben (34; 34') miteinander verbunden sind, auf welche Streben sich die Waagschale abstützt.

7. Waage nach Anspruch 6, dadurch gekennzeichnet, daß auch die Streben (34; 34') Bestandteile des einstückigen Bauteils (10; 10') sind.

8. Waage nach einem der Ansprüche 1 bis 7, dadurch gekennzeichnet, daß die Schwenklager durchwegs in das einstückige Bauteil (10; 10') eingeformte Biegelager (22) sind.

9. Waage nach einem der Ansprüche 1 bis 8, dadurch gekennzeichnet, daß das Meßglied (26; 58) über nach einem Dünnfilmverfahren aufgebrachte Dehnmeß-Widerstände (30; 30') verfügt.

10. Waage nach Anspruch 9, dadurch gekennzeichnet, daß die Dehnmeß-Widerstände nur auf einer Fläche des Meßgliedes (26; 58) aufgebracht sind.

## Claims

1. Top pan balance, comprising
— a frame (12, 12a),
— at least two levers (16a, 16b; 40, 42) essentially extending in one plane and arranged within the frame and attached thereto by means of swivel bearings (22),
— an elastically deformable measuring element (26, 30; 58, 30') connected with the levers and supplying electrical signals,
— a weighing pan, directly or indirectly supported by the levers, and
— a housing,
characterized in that the levers (16a, 16b; 40, 42), the frame (12, 12a) and the swivel bearings (22) form an essentially two-dimensional single unit (10; 10') extending horizontally.

2. Balance as in claim 1, characterized in that the single unit further comprises the measuring element (26).

3. Balance as in claim 1, characterized in that the frame (12; 12a) is rectangular and that the weighing pan is a rectangular platform forming the upper part of the housing.

4. Balance as in claim 1, 2 or 3, characterized in that the stems (18a, 18b) of the levers (16a, 16b) are arranged parallel to each other and that the measuring element (26) is arranged between the two levers such that it undergoes a torsion when the weighing pan is loaded.

5. Balance as in claim 1, 2 or 3, characterized in that the levers (40, 42) each have two legs (46, 50) forming a V, that the levers are flexibly linked to each other and that the measuring element (58) connects the free end of the first lever (40) with the frame-facing end of the second lever (42).

6. Balance as in claim 4 or 5, characterized in that the levers (16a, 16b; 40, 42) are further coupled to each other by means of two rigid struts (34; 34') flexibly connected thereto, the struts supporting the weighing pan.

7. Balance as in claim 6, characterized in that the struts (34; 34') too form part of the single unit (10; 10').

8. Balance as in one of the preceding claims, characterized in that the swivel bearings are flexible bearings (22) forming part of the single unit (10; 10').

9. Balance as in one of the preceding claims, characterized in that the measuring element (26; 58) comprises strain measuring resistors (30; 30') applied thereto by a thin film method.

10. Balance as in claim 9, characterized in that the strain measuring resistors are applied only to one surface of the measuring element (26; 58).

## Revendications

1. Balance à plateau en tête, comportante
— un cadre porteur (12, 12a)
— au moins deux leviers (16a, 16b; 40, 42) essentiellement situés dans un plan délimité par le cadre porteur et reliés au celui-ci moyen de paliers pivotants (22)
— un organe de mesure (26, 30; 58, 30') déformable de façon élastique, rélié aux leviers et produisant des signaux électriques
— un plateau de balance supporté directement ou indirectement par les leviers, et
— un boîtier,
caractérisée en ce que les leviers (16a, 16b; 40, 42), le cadre porteur (12, 12a) et les paliers pivotants (22) forment un élément unitaire de construction essentiellement bidimensionel et s'étendant à l'horizontale.

2. Balance selon la revendication 1, caractérisée en ce que l'élément unitaire de construction comporte aussi l'organe de mesure (26).

3. Balance selon la revendication 1, caractérisée en ce que le cadre porteur (12, 12a) est rectangulaire et que le plateau de balance est une plate-forme rectangulaire constituant la partie superieure de boîtier.

4. Balance selon l'une des revendications 1 à 3, caractérisée en ce que les bras (18a, 18b) des leviers (16a, 16b) sont disposés de manière parallele l'un à l'autre et que l'organe de mesure (26) est placé entre les bouts des leviers de telle façon qu'il subit une torsion si le plateau de balance est chargé.

5. Balance selon l'une des revendications 1 à 3, caractérisée en ce que les leviers (40, 42) comportent des côtés (46, 50) disposées en V, que les leviers sont reliés l'un à l'autre par une articulation et que l'organe de mesure (58) relie le bout libre d'un (40) des leviers avec le bout situé du côté du cadre de l'autre levier (42).

6. Balance selon la revendication 4 ou 5, caracterisée en ce que les leviers (16a, 16b; 40, 42) sont en plus reliés l'un à l'autre par deux traverses rigides (34; 34'), lesdites traverses étant reliées aux leviers de façon articulée et formant les supports pour le plateau de balance.

7. Balance selon revendication 6, caracterisée en ce que les traverses (34, 34') aussi sont parties constituantes de l'élément unitaire de construction (10; 10').

8. Balance selon l'une des revendications 1 à 7, caracterisée en ce que tous les paliers pivotants sont paliers de flexion (22) formant partie de l'élément unitaire de construction (10; 10').

9. Balance selon l'une des revendications 1 à 8, caracterisée en ce que l'organe de mesure (26; 58) comporte des jauges de contrainte (30; 30') appliquées par un procédé de couche mince.

10. Balance selon la revendication 9, caracterisée en ce que les jauges de contrainte ne sont placées que sur une surface de l'organe de mesure (26; 58).

Figur 1

24  22

12 a

20a  38  34  24  14

Figur    2

30

32

34  26  28  34

Figur    3

Figur 4

0 050 708

Figur 5

Figur 6

Figur 7